# EUROPÄISCHE PATENTSCHRIFT

(11) **EP 2 767 434 B1**
(45) Veröffentlichungstag und Bekanntmachung des Hinweises auf die Patenterteilung: **15.06.2016**
(21) Anmeldenummer: 13155270.5
(22) Anmeldetag: 14.02.2013
(51) Int. Cl.: B60P 1/00, A01D 90/00

(54) **Abschiebewagen und Umrüstverfahren**
Push-off carriage and conversion process
Chariot de déversement et procédé de rééquipement

(43) Veröffentlichungstag der Anmeldung: 20.08.2014
(73) Patentinhaber: Oehler Maschinen Fahrzeugbau GmbH, 77652 Offenburg (DE)
(72) Erfinder: Oehler, Manfred, 77652 Offenburg (DE); Calin, Morarium, 555250 Marsa-Avrig (RO)
(74) Vertreter: Westphal, Mussgnug & Partner Patentanwälte mbB

(56) Entgegenhaltungen:
- DE-U1- 9 212 103
- DE-U1-202008 001 207
- DE-U1-202009 015 019

## Beschreibung

Die Erfindung betrifft einen Abschiebewagen gemäß den Merkmalen des Oberbegriffs des Anspruchs 1 und ein Umrüstverfahren gemäß den Merkmalen des Anspruchs 6, wie er bzw. es beispielsweise der EP 2 319 300 A2 entnommen werden kann.

Der bekannte Abschiebewagen mit Vorrichtung zur Entladung von Schüttgut weist eine einem Zugfahrzeug zugewandte Frontwand und eine hochklappbare Heckwand auf, die in Fahrtrichtung des Zuges gesehen hinten angeordnet ist. In einer der Fahrtrichtung entgegengesetzten Abschieberichtung von der Frontwand zur Heckwand ist ein Abschiebeschlitten verschiebbar. Außerdem ist ein Mittel zum Fördern eines zu entladenden Schüttgutes vorgesehen.

Solche Abschiebewagen werden vor allem in der Landwirtschaft zum Transport unterschiedlichster Stoffe eingesetzt. Als Beispiele für die Mittel zum Fördern sind in der Landwirtschaft beispielsweise Dosier- und Förderschnecken sowie Einrichtungen zum pneumatischen Fördern des Schüttgutes, wie Fördergebläse oder Zellenradschleusen, bekannt. Die Anschaffung derart ausgestatteter Fahrzeuge kommt für den Benutzer nur dann in Betracht, wenn sie ständig nur für derart zu entladende Schüttgüter eingesetzt werden. Das ist ganzjährig eher nicht gefragt. Im Stand der Technik ist dieser Nachfragesituation mit austauschbaren Hinterbordwänden begegnet worden.

Es besteht somit ein Problem darin, solche Fahrzeuge flexibler einsetzbar zu machen.

Das Problem wird gelöst durch einen Abschiebewagen mit den kennzeichnenden Merkmalen des Anspruchs 1 sowie durch ein Umrüstverfahren mit den Merkmalen des Anspruchs 6.

Vorteilhafte Ausführungsformen sind in den jeweiligen Unteransprüchen angegeben.

Erfindungsgemäß weist der Abschiebewagen an seiner Unterseite abklappbare und/oder ausfahrbare Stützen auf. Die Unterseite des erfindungsgemäßen Abschiebewagens ist lösbar mit einem Unterfahrwagen verbunden.

Das erfindungsgemäße Umrüstverfahren verwendet einen erfindungsgemäßen Abschiebewagen, wobei die Fahrtrichtung des Abschiebewagens während des Umrüstens gewechselt wird, sodass der Abschiebeschlitten je nach Bedarf und entsprechend gewählter Fahrtrichtung von vorne nach hinten oder von hinten nach vorne wirkt.

Ein Vorteil der Erfindung besteht darin, dass je nach Bedarf der Benutzer entscheidet, welchem Verwendungszweck entsprechend der Abschiebewagen ausgerichtet wird. Die Merkmale des erfindungsgemäßen Abschiebewagens erlauben nämlich eine Umkehr der Fahrtrichtung. In der üblichen Ausrichtung schiebt der Abschiebeschlitten das Schüttgut der hochklappbaren Heckwand entgegen. In der umgekehrten Ausrichtung schiebt der Abschiebeschlitten das Schüttgut in Fahrtrichtung gesehen von hinten nach vorne. Sind die Mittel zum Fördern des Schüttgutes gemäß Stand der Technik heckseitig angeordnet, sind sie erfindungsgemäß dem Zugfahrzeug zugewandt, da die Heckseite nach Fahrtrichtungswechsel zur Frontseite geworden ist.

Gemäß einer vorteilhaften Ausführungsform des erfindungsgemäßen Abschiebewagens ist / sind heckseitig das oder die Mittel zum Fördern des zu entladenden Schüttgutes angeordnet. Gemeint ist in herkömmlicher Fahrtrichtung heckseitig. Der Ort der Mittel ist gemäß dieser Ausführungsform das Ende des Abschiebewagens zu dem der Abschiebeschlitten das Schüttgut hin fördert. Das oder die Mittel ist / sind vorteilhaft mechanisch mittels einer heckseitig (nach Sicht in herkömmlicher Fahrtrichtung) angekoppelten Zugmaschine angetrieben, insbesondere mittels einer Gelenkwelle.

Der Antrieb erfolgt somit direkt durch vorhandene Mittel des Zugfahrzeugs. Auf einen separaten Antrieb, der beispielsweise hydraulisch über eine große Distanz vom Zugfahrzeug bis zum anderen Ende des Abschiebewagens zu versorgen ist, kann verzichtet werden.

Gemäß einer weiteren vorteilhaften Ausführungsform des erfindungsgemäßen Abschiebewagens ist / sind das oder die Mittel zum Fördern des zu entladenden Schüttgutes bei frontseitig angekoppelter Zugmaschine mittels zumindest eines entlang der Längsachse der Unterseite verlaufenden Übertragungsorgans mechanisch mittels der Zugmaschine angetrieben.

Diese Anschlussmöglichkeit in herkömmlicher Ausrichtung des Abschiebewagens erlaubt dem Benutzer eine freie Entscheidung darüber, wie er den Abschiebewagen betreiben möchte.

Gemäß einer weiteren vorteilhaften Ausführungsform des erfindungsgemäßen Abschiebewagens ist die hochklappbare Heckwand abnehmbar.

Gemäß einer weiteren vorteilhaften Ausführungsform des erfindungsgemäßen Abschiebewagens ist das bzw. sind die Mittel zum Fördern des Schüttgutes heckseitig ankoppelbar, nachdem der Unterfahrwagen der Abschieberichtung entgegen unterhalb der Unterseite eingefahren und die Unterseite auf dem Unterfahrwagen abgesetzt worden ist. Ansonsten ist / sind das oder die Mittel lösbar mit dem Abschiebewagen verbunden.

Gemäß einer vorteilhaften Ausführungsform des erfindungsgemäßen Umrüstverfahrens zieht ein frontseitig an den Abschiebewagen angekoppeltes Zugfahrzeug den Unterfahrwagen entgegen der Abschieberichtung unter dem Abschiebewagens heraus, nachdem der Abschiebewagens mittels der Stützen fest auf dem befahrenen Untergrund abgestützt worden ist. Die Zugmaschine schiebt nachfolgend den Unterfahrwagen mit seinem hinteren Ende voran auf der Heckseite (nach herkömmlicher Sicht) des Abschiebewagens entgegen der Abschieberichtung unter den Abschiebewagen, so-dass die Deichsel des Unterfahrwagens heckseitig aus dem Abschiebewagen in Abschieberichtung hervorsteht. Die ursprüngliche Heckseite ist jetzt zur Frontseite geworden. Das Zugfahrzeug wird nachfolgend heckseitig (nach herkömmlicher Sicht) an die Mittel zum Fördern des Schüttgutes angeschlossen.

Im Folgenden wird die Erfindung gemäß einem Äusführungsbeispiel anhand von Zeichnungen in schematischer Darstellung näher erläutert.

Es zeigen
- Fig. 1: einen erfindungsgemäßen Abschiebewagens mit frontseitig angekoppeltem Zugfahrzeug und heckseitig von einem Stapler ergriffener Heckklappe in schematisierter Darstellung,
- Fig. 2: den Abschiebewagen aus Fig. 1 mit abgenommener Heckklappe,
- Fig. 3: den Abschiebewagen aus Fig. 1, auf Stützen abgestützt, wobei ein Unterfahrwagen entgegen einer Abschieberichtung herausgezogen dargestellt ist,
- Fig. 4: den abgestützten Abschiebewagen aus Fig. 3, unter den der Unterfahrwagen entgegen der Abschieberichtung heckseitig eingefahren wird,
- Fig. 5: den gemäß den vorangehenden Figuren umgerüsteten Abschiebewagen und ein auf dessen ursprünglichen Heckseite mittels eines Staplers zum Anflanschen bereitgestelltes Mittel zum Fördern von Schüttgut,
- Fig. 6: den Abschiebewagen aus Figur 5 mit angeflanschtem Mittel zum Fördern,
- Fig. 7: den Abschiebewagen aus Fig. 6 mit angekoppeltem Zugfahrzeug sowie links daneben dargestellte neuer Frontansicht auf den Abschiebewagen aus Sicht des Zugfahrzeugs und
- Fig. 8: den Abschiebewagen aus Fig. 7 in einer Arbeitsstellung mit ausgefahrenem Mittel zum Fördern mit links daneben analog zur Figur 7 dargestellter Frontansicht.

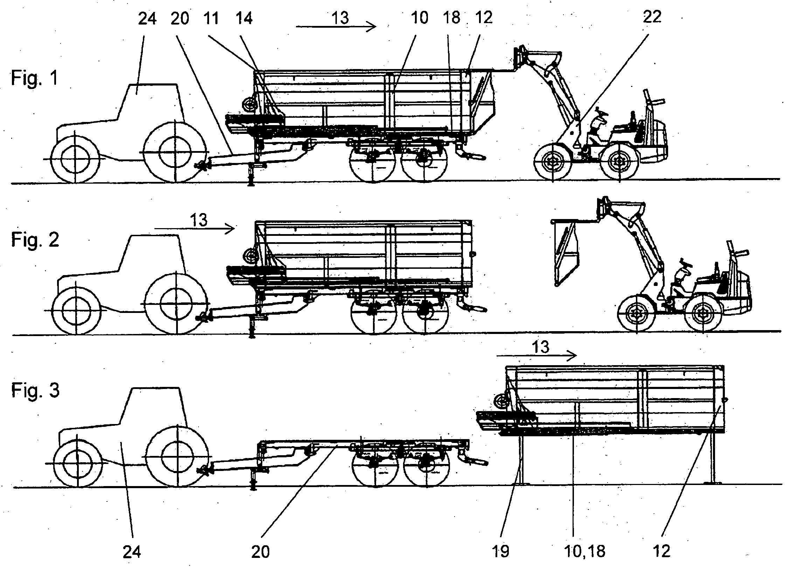

In den Figuren 1 bis 8 ist ein Ablauf eines erfindungsgemäßen Umrüstverfahrens mit einem erfindungsgemäßen Abschiebewagen 10 nach einem Ausführungsbeispiel dargestellt, wobei die Nummerierung der Figuren aufeinander folgend den aufeinander folgenden Verfahrensschritten entspricht. Wird umgekehrt umgerüstet, müsste der Figurensatz in umgekehrter Reihenfolge betrachtet werden. Selbstverständlich umfasst die Erfindung auch den umgekehrten Rückrüstvorgang.

Der Abschiebewagen hat - der herkömmlichen Verwendung entsprechend - eine Frontwand 11 und eine Heckwand 12. Nach herkömmlicher Verwendung wird ein Abschiebeschlitten 14 von der Frontwand 11 zur Heckwand 12 hin in einer Abschieberichtung 13 von vorne nach hinten verschoben. Das Abschieben bewirkt nach herkömmlicher Anordnung ein Zusammenschieben des Schüttgutes (nicht dargestellt) zu Mitteln 16 zum Fördern des zu entladenden Schüttgutes hin. Daher ist herkömmlich das Mittel 16 zum Fördern heckseitig angeordnet. In den Figuren 1 bis 3 sind ein Zugfahrzeug 24 und der Abschiebewagen 10 in herkömmlicher Anordnung dargestellt, in Abschieberichtung gesehen Zugfahrzeug 24 vorne und Abschiebewagen 10 hinten.

Der Abschiebewagen 10 weist an seiner Unterseite 18 abklappbare und ausfahrbare Stützen 19 auf, wie sie in der Transportwirtschaft bekannt sind. Der Abschiebewagen 10 ist den bekannten Anordnungen entsprechend lösbar mit einem Unterfahrwagen 20 verbunden. In Figur 3 ist der Abschiebewagen 10 auf den Stützen 19 abgestützt und der Unterfahrwagen 20 entgegen der Abschieberichtung 13 herausgefahren dargestellt.

In den Figuren 1 und 2 ist ein Detail des Ausführungsbeispiels dargestellt, wie es nicht allgemein für die Erfindung vorgesehen ist. Hier wird vorteilhaft die hochklappbare Heckwand 12 mittels eines Staplers 22 abgenommen. An ihrer 12 Stelle soll im weiteren Umrüstverfahrensablauf ein Fördermodul mit einem Mittel 16 zum Fördern von Schüttgut angeflanscht werden. Bei anderen erfindungsgemäßen Ausführungsformen ist die Fördereinrichtung von vorneherein in die Heckwand integriert (nicht dargestellt).

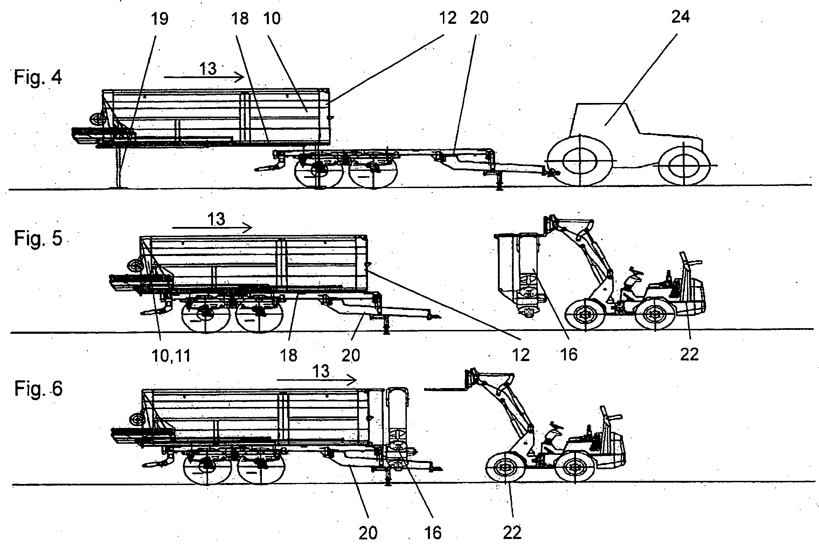

Erfindungswesentlich ist zunächst ein umgekehrtes Einfahren des Unterfahrwagens 20 auf der ursprünglichen Heckseite, die nun (Figuren 4 bis 8) zur dem Zugfahrzeug 24 zugewandten Frontseite geworden ist. In den Figuren 5 und 6 ist das Zugfahrzeug 24 nur vorübergehend abgekoppelt, um dem Stapler 22 gemäß dem vorteilhaften Verfahrensbeispiel zu erlauben, das bereits erwähnte Fördermodul anzufahren.

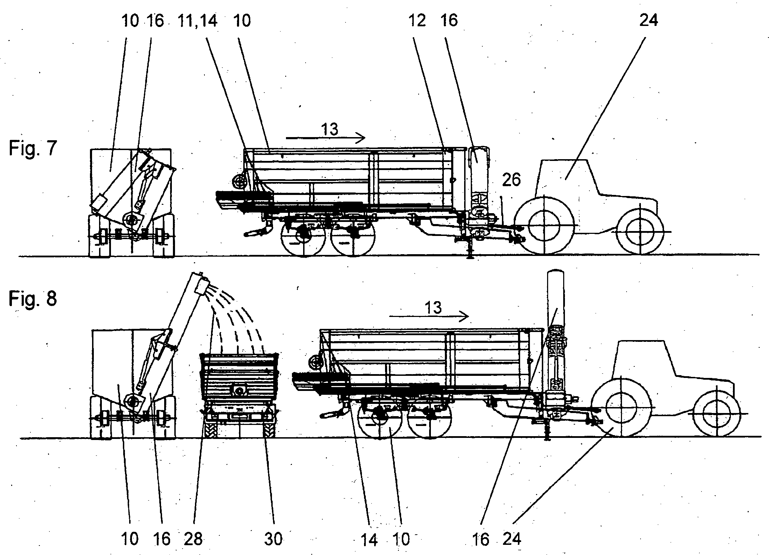

In den Figuren 7 und 8 ist die Arbeitsweise mit einem erfindungsgemäß umgerüsteten Abschiebewagen 10 verdeutlicht. Die Mittel 6 zum Fördern sind nun dem Zugfahrzeug 24 zugewandt angeordnet. Den Mitteln 6 zum Fördern entgegen schiebt der Abschiebeschlitten das Schüttgut, also nun von hinten nach vorne zum Zugfahrzeug 24 hin. Das Zugfahrzeug 24 treibt die Mittel 6 zum Fördern vorteilhaft auf kurzem Weg direkt mit einer ohnehin vorhandenen Gelenkwelle 26 an. Das Ergebnis ist in Figur 8 dargestellt, wonach ein Schüttgut 28 aus dem Abschiebewagen 10 gefördert und in einen weiteren Ladewagen 30 umgeladen wird.

### Bezugszeichenliste

- 10: Abschiebewagens
- 11: Frontwand
- 12: Heckwand
- 13: Abschieberichtung
- 14: Abschiebeschlitten
- 16: Mittel zum Fördern
- 18: Unterseite
- 19: Stützen

- 20: Unterfahrwagen
- 22: Stapler
- 24: Zugfahrzeug
- 26: Gelenkwelle
- 28: Schüttgut

- 30: Ladewagen

## Patentansprüche

1. Abschiebewagen (10) mit einem von einer Frontwand (11) zu einer Heckwand (12) in einer Abschieberichtung (13) verschiebbaren Abschiebeschlitten (14), einer hochklappbaren Heckwand (12) und einem Mittel (16) zum Fördern eines zu entladenden Schüttgutes,
**dadurch gekennzeichnet, dass** der Abschiebewagens (10) an seiner Unterseite (18) abklappbare und/oder ausfahrbare Stützen (19) aufweist und dass die Unterseite (18) des Abschiebewagens (10) lösbar mit einem Unterfahrwagen (20) verbunden ist.

2. Abschiebewagen (10) nach Anspruch 1,
**dadurch gekennzeichnet, dass** heckseitig (12) das oder die Mittel (16) zum Fördern des zu entladenden Schüttgutes angeordnet ist/sind und dass das oder die Mittel mechanisch mittels eines heckseitig angekoppelten Zugfahrzeugs (24) angetrieben ist/sind, insbesondere mittels einer Gelenkwelle (26).

3. Abschiebewagen (10) nach Anspruch 2,
**dadurch gekennzeichnet, dass** das oder die Mittel (16) zum Fördern des zu entladenden Schüttgutes bei frontseitig angekoppelter Zugmaschine (24) mittels zumindest eines entlang der Längsachse der Unterseite (18) verlaufenden Übertragungsorgans mechanisch mittels des Zugfahrzeugs (24) angetrieben ist/sind.

4. Abschiebewagen (10) nach einem der vorangehenden Ansprüche,
**dadurch gekennzeichnet, dass** die hochklappbare Heckwand (12) abnehmbar ist.

5. Abschiebewagen (10) nach einem der vorangehenden Ansprüche,
**dadurch gekennzeichnet, dass** die Mittel (16) zum Fördern des Schüttgutes heckseitig ankoppelbar ist, nachdem der Unterfahrwagen (20) der Abschieberichtung (13) entgegen unterhalb der Unterseite (18) eingefahren und die Unterseite (18) auf dem Unterfahrwagen (20) abgesetzt worden ist, und dass ansonsten das oder die Mittel (16) lösbar mit dem Abschiebewagen (10) verbunden ist/sind.

6. Umrüstverfahren mit einem Abschiebewagen (10) nach einem der vorangehenden Ansprüche, wobei die Fahrtrichtung des Abschiebewagens während des Umrüstens gewechselt wird, sodass der Abschiebeschlitten (14) je nach Bedarf und entsprechend gewählter Fahrtrichtung von vorne nach hinten oder von hinten nach vorne wirkt.

7. Umrüstverfahren nach Anspruch 6,
**dadurch gekennzeichnet, dass** ein frontseitig (11) an den Abschiebewagens (10) angekoppeltes Zugfahrzeug (24) den Unterfahrwagen (20) entgegen der Abschieberichtung (13) unter dem Abschiebewägen (10) herauszieht, nachdem der Abschiebewagens (10) mittels der Stützen (19) abgestützt worden ist, und dass die Zugmaschine (24) den Unterfahrwagen (20) mit seinem hinteren Ende voran auf der Heckseite (12) des Abschiebewagens (10) entgegen der Abschieberichtung (13) unter den Abschiebewagen (10) schiebt, sodass die Deichsel des Unterfahrwagens (20) heckseitig (12) aus dem Abschiebewagen (10) in Abschieberichtung (13) hervorsteht, und dass das Zugfahrzeug (24) nun heckseitig an die Mittel (16) zum Fördern des Schüttgutes angeschlossen wird.

## Claims

1. Ejector trailer (10) with an ejector carriage (14) that can be moved in a direction of ejection (13) from a front wall (11) to a rear wall (12), a rear wall (12) that can be folded upwards, and a means (16) for conveying the bulk material that is to be unloaded,
**characterised in that** on its underside (18), the ejector trailer (10) has supports (19) that can be folded down and/or extended and that the underside (18) of the ejector trailer (10) is detachably connected to an undercarriage (20).

2. Ejector trailer (10) according to claim 1,
**characterised in that** arranged at the rear (12) are the means (16) for transporting the bulk material that is to be unloaded, and that the means are driven mechanically by means of a towing vehicle (24) that is coupled to the rear, in particular by means of an cardan shaft (26).

3. Ejector trailer (10) according to claim 2,
**characterised in that** the means (16) for conveying the bulk material to be unloaded in the case of a tractor (24) that is coupled at the front, are driven mechanically by means of the towing vehicle (24), via at least one transmission element that runs along the longitudinal axis of the underside (18).

4. Ejector trailer (10) according to one of the preceding claims,
**characterised in that** the rear wall (12) that can be folded upwards is detachable.

5. Ejector trailer (10) according to one of the preceding claims,
**characterised in that** the means (16) for conveying the bulk material can be coupled to the rear, after the undercarriage (20) has been driven in, counter to the direction of ejection (13), below the underside (18), and the underside (18) has been lowered onto the undercarriage (20), and that for the rest, the means (16) are detachably connected to the ejector trailer (10).

6. Conversion method with an ejector trailer (10) according to one of the preceding claims, wherein the direction of travel of the ejector trailer is changed in the course of conversion, so that the ejector carriage (14), depending on requirements and in accordance with the chosen direction of travel, works from the front towards the back or from the back towards the front.

7. Conversion method according to claim 6,
**characterised in that** a towing vehicle (24) connected to the ejector trailer (10) at the front (11) pulls out the undercarriage (20) counter to the direction of ejection (13) under the ejector trailer (10), after the ejector trailer (10) has been supported by means of the supports (19), and that with its rear end, the tractor (24) pushes the undercarriage (20) forward on the rear end (12) of the ejector trailer (10), counter to the direction of ejection (13), under the ejector trailer (10), so that at the rear (12), the drawbar of the undercarriage (20) projects out of the ejector trailer (10) in the direction of ejection (13), and that the towing vehicle (24) is now connected at the rear to the means (16) for conveying the bulk material.

## Revendications

1. Véhicule de déversement (10) comprenant un chariot de déversement (14) mobile en translation d'une paroi avant (11) à une paroi arrière (12) dans une direction de déversement (13), une paroi arrière (12) relevable et un moyen (16) d"évacuation de produits en vrac à décharger,
**caractérisé en ce que**
le véhicule de déversement (10) comporte sur sa face inférieure (18) des supports rabattables et/ou déployables (19) et la face inférieure (18) du véhicule de déversement (10) est reliée de façon amovible à un véhicule de soubassement (20).

2. Véhicule de déversement (10) conforme à la revendication 1,
**caractérisé en ce que**
le ou les moyen(s) (16) d'évacuation des produits en vrac à décharger est/ou sont monté(s) côté arrière (12), et ce ou ces moyen(s) est/ou sont mécaniquement actionné(s) au moyen d'un véhicule tracteur (24) accouplé côté arrière, en particulier au moyen d'un arbre de transmission (26).

3. Véhicule de déversement (10) conforme à la revendication 2,
**caractérisé en ce que**
dans le cas d'un véhicule tracteur (24) accouplé côté frontal le ou les moyen(s) (16) d'évacuation des produits en vrac à décharger est/ou sont actionné(s) mécaniquement par le véhicule tracteur (24) au moyen d'au moins un organe de transmission s'étendant le long de l'axe longitudinal de la face inférieure (18).

4. Véhicule de déversement (10) conforme à l'une des revendications précédentes,
**caractérisé en ce que**
la paroi arrière relevable (12) est amovible.

5. Véhicule de déversement (10) conforme à l'une des revendications précédentes,
**caractérisé en ce que**
les moyens (16) permettant l'évacuation des produits en vrac peuvent être accouplés côté arrière après que le véhicule de soubassement (20), ait été mis en place au dessous de la face inférieure (18) en direction opposée à la direction de déversement et que la face inférieure (18) ait été déposée sur le véhicule de soubassement (20), puis, le ou les moyen(s) (16) est/ou sont relié(s) de manière amovible avec le véhicule de déversement (10).

6. Procédé d'adaptation mis en oeuvre avec un véhicule de déversement (10) conforme à l'une des revendications précédentes, selon lequel la direction de déplacement du véhicule de déversement est modifiée pendant l'adaptation de sorte que le chariot de déversement (14) agisse selon les besoins et conformément à la direction de déplacement choisie de l'avant vers l'arrière ou de l'arrière vers l'avant.

7. Procédé d'adaptation conforme à la revendication 6,
**caractérisé en ce qu'**
un véhicule de traction (24) accouplé côté frontal (11) au véhicule de déversement (10) extrait le véhicule de soubassement (20) sous le véhicule de déversement (10) dans la direction opposée à la direction de déversement (13) après que le véhicule de déversement (10) ait été mis en appui au moyen des supports (19), et le véhicule tracteur (24) déplace vers l'avant par translation le véhicule de soubassement (20) par son extrémité arrière sur la face arrière (12) du véhicule de déversement (10)dans la direction opposée à la direction de déversement (13), au dessous du le véhicule de déversement (10) de sorte que le timon du véhicule de soubassement (20) dépasse côté arrière (12) du véhicule de déversement (10) dans la direction de déversement (13), et le véhicule de traction (24) est relié côté arrière aux moyens (16) d'évacuation des produits en vrac.
